# FASCICULE DE BREVET EUROPEEN

(11) **EP 1 381 122 B1**
(45) Date de publication et mention de la délivrance du brevet: **18.05.2011**
(21) Numéro de dépôt: 03291636.3
(22) Date de dépôt: 02.07.2003
(51) Int. Cl.: H01R 35/02, B60R 16/02

(54) **Pièce de guidage flexible interne à un contact tournant**
Internes, flexibles Führungsstück für einen Drehkontakt
Internal, flexible guiding piece for rotating contact

(30) Priorité: 12.07.2002 FR 0208866
(43) Date de publication de la demande: 14.01.2004
(73) Titulaire: Delphi Technologies, Inc., Troy, MI 48007 (US)
(72) Inventeur: Moy, Aurélie, 69100 Villeurbanne (FR); Leroux, Mathias, 67000 Strasbourg (FR); Richert, Jean-Jacques, 67700 Waldolwisheim (FR)
(74) Mandataire: Robert, Vincent

(56) Documents cités:
- EP-A- 0 741 058
- DE-A- 3 931 905
- US-A- 5 700 153
- US-A- 5 772 146
- US-A- 6 096 976

## Description

La présente invention concerne un dispositif assurant la liaison électrique entre deux corps respectivement fixe et mobile animés d'un mouvement relatif de rotation.

De tels dispositifs, également appelés contacts tournants, sont notamment employés dans l'industrie automobile, dans les colonnes de direction des véhicules pour permettre la connexion électrique entre des éléments situés dans le volant, et par conséquent mobiles en rotation, et un circuit fixe câblé dans l'habitacle desdits véhicules. Bien qu'il existe de nombreuses autres applications possibles de ces dispositifs, l'exemple des colonnes de direction sera utilisé à titre préférentiel dans la suite de la description, pour en faciliter la lecture en l'éclairant par cette application particulière.

Les contacts tournants connus et utilisés dans ce domaine sont configurés de telle manière que la partie fixe et la partie mobile définissent entre elles un espace annulaire d'axe confondu à l'axe de rotation, dans lequel est enroulé par exemple en spirale un câble plat flexible véhiculant plusieurs lignes conductrices ou plusieurs fils conducteurs séparés. Cet espace annulaire comporte notamment deux parois d'allure parallèle à l'axe de rotation auxquelles sont fixées les deux extrémités du câble plat ou des fils, et il est limité par deux flasques radiaux, chacun solidarisé à l'une desdites parois.

Dans ce type de configuration, le câble ou les fils flexibles investissent différemment l'espace selon notamment le sens de la rotation. Ainsi, dans un premier sens, ils se bobinent autour de la pièce centrale du contact tournant. Dans les configurations les plus simples, ils ne bénéficient d'aucun guidage particulier et leur déplacement, notamment dans des directions radiales, n'est pas contrôlé.

Ils subissent cependant des contraintes permanentes, par exemple dues aux mouvements de rotation d'une partie par rapport à l'autre et à ceux que subit le véhicule, dont la vitesse, la fréquence et l'amplitude dépendent pour l'essentiel du mouvement imprimé au volant et des conditions de déplacement du véhicule. Ces contraintes, s'appliquant à des portions diverses du câble flexible ou des fils, peuvent provoquer des déplacements non contrôlés générant des vibrations ou des bruits qui ne sont dès lors pas maîtrisables, du fait de l'absence de tout élément de guidage du câble en mouvement. Le ou les éléments de liaison électrique subit (-ssent) en particulier des déplacements axiaux ou radiaux qui le (s) conduise (nt) à heurter les parois ou flasques limitant le volume annulaire.

Pour résoudre ce problème, qui conduit à un inconfort auditif pour les occupants du véhicule, il a été proposé, comme décrit par exemple dans le document EP 0 741 058, d'inclure dans l'espace annulaire une pièce notamment destinée à le combler partiellement, pour empêcher dans la mesure du possible tout mouvement parasite du câble lors de ses phases d'enroulement / déroulement. Cette pièce occupe la quasi-totalité de l'espace annulaire, et comporte notamment une fente d'allure radiale permettant le passage du câble ou des fils de l'une à l'autre des parois auxquelles leurs extrémités sont fixées. Elle assure de fait un guidage, puisque les espaces résiduels pour l'enroulement / déroulement, situés de part et d'autre de ses flancs, sont beaucoup plus réduits et limitent en particulier les déplacements d'allure radiale de certains tronçons du câble ou des fils, typiquement générateurs de bruits et de vibrations.

Pour assurer sa fonction de guidage, ladite pièce comporte ainsi des faces se développant parallèlement aux parois de l'espace annulaire, et elle adopte de fait une forme également annulaire. Dans les configurations proposées, elle permet également l'inversion de l'enroulement du câble ou des fils au niveau de ladite fente radiale. Elle est alors entraînée selon une trajectoire circulaire centrée sur l'axe de rotation de la pièce mobile. Cette inversion, et le déplacement de cette pièce relativement aux deux parties fixe et mobile, permettent de faire varier les longueurs respectives de la portion du câble ou des fils bobinée sur la paroi intérieure et de la portion enroulée au voisinage de la paroi extérieure.

ll est à noter qu'une telle inversion pourrait être mise en oeuvre sans cette pièce mais que, selon la nature du câble ou des fils, une immobilité prolongée du contact tournant peut provoquer des difficultés lorsqu'il est réutilisé, car le câble ou les fils peut(vent) garder la "mémoire" de la déformation résultant de la boucle d'inversion. Le guidage assuré par la pièce intermédiaire limite les effets engendrés par la déformation ainsi mémorisée.

L'inversion, notamment par interposition d'une telle pièce, permet de plus de réduire sensiblement la longueur de câble ou de fil, du fait de son influence sur la différence des diamètres d'enroulement / déroulement dans les différentes phases de fonctionnement. Les contacts mécaniques avec les parois de l'espace annulaire sont alors corollairement réduits, ainsi que les bruits dus aux frottements. Elle limite enfin l'amplitude des déplacements radiaux des portions de câble ou de fils, et par conséquent l'intensité des chocs sur les parois axiales.

En d'autres termes, l'interposition d'une pièce intermédiaire permet une certaine réduction du niveau de bruit, indispensable pour un accessoire situé à proximité du conducteur du véhicule, en plus de l'abaissement substantiel de la longueur du câble plat flexible ou des fils de liaison, facilitant ainsi leur montage entre les parties fixe et mobile et abaissant le coût de leur production ainsi que ceux du contact tournant.

L'espace qui subsiste entre les parois axiales de cette pièce intermédiaire et les deux parois du volume annulaire qui leur font face, procurant les jeux fonctionnels nécessaires au bon fonctionnement du contact tournant, ne permet cependant pas d'éliminer totalement le bruit, car les portions de câble ou de fils situées de part et d'autre de ladite pièce peuvent encore être soumis à des déplacements incontrôlés, et heurter lesdites parois en vis-à-vis, qui délimitent à présent les deux volumes d'enroulement / déroulement. Des portions au moins temporairement lâches du câble ou des fils peuvent d'ailleurs aussi bien heurter les flasques suite à des mouvements axiaux.

L'objectif principal de la présente invention est d'améliorer la conception des pièces intermédiaires de sorte qu'elles éliminent pratiquement, totalement, la possibilité de déplacements incontrôlés du câble ou des fils de liaison électrique, et les nuisances sonores qui en résultent.

Cet objectif s'applique à tous les types de mouvements, qu'ils soient radiaux, axiaux ou complexes, les portions temporairement lâches du câble ou des fils pouvant être entraînées dans plusieurs directions séquentiellement ou simultanément, et créer dans tous les cas des bruits parasites à supprimer.

A cet effet, le dispositif de l'invention, assurant comme mentionné la liaison électrique entre deux corps respectivement fixe et mobile animés d'un mouvement relatif de rotation définissant entre eux un espace annulaire d'axe confondu avec l'axe de rotation, est délimité classiquement par deux flasques radiaux, chacun solidaire de l'une de deux parois axiales en regard respectivement intérieure et extérieure, entre lesquelles est disposé au moins un câble plat flexible ou au moins un ensemble de fils flexibles de liaison électrique enroulé de sorte que chacune de ses extrémités soit fixée à l'une desdites parois.

Dans cet espace se trouve de plus également au moins ladite pièce intermédiaire de guidage d'allure annulaire dotée d'un canal d'orientation d'allure radiale permettant l'inversion de l'enroulement du câble ou de l'ensemble de fils flexibles et la variation simultanée de la longueur de leurs portions situées de part et d'autre de ses parois axiales.

L'invention se caractérise à titre principal en ce que la paroi axiale intérieure de ladite pièce est rigide alors que la paroi axiale extérieure est flexible et élastique.

Par rapport à ses devanciers, le système de l'invention se distingue par conséquent par l'existence d'un moyen de tension du câble destiné à prévenir les déplacements parasites et les bruits qui en découlent. L'élasticité de la paroi extérieure conduit à un effet tenseur, qui maintient le câble au contact de la pièce intermédiaire d'inversion, et l'empêche de se déplacer en direction des parois, voire des flasques délimitant l'espace annulaire lorsque le dispositif formant le contact tournant est soumis, avec le véhicule, à des déplacements variés.

De préférence, la paroi axiale intérieure de la pièce d'inversion peut être choisie circulaire, créant un espace annulaire réduit avec la paroi qui lui fait face du volume interne du contact tournant, et facilitant leur montage coaxial.

Dans les systèmes de l'art antérieur, tout blocage temporaire ou toute différence de vitesse de déplacement d'une portion du câble ou des fils au cours du mouvement rotatif relatif pouvait entraîner un relâchement d'une autre portion, devenant du coup sujette à des déplacements parasites potentiellement générateurs de bruit. Le but de la nouvelle configuration est de transformer toute contrainte en un endroit en une déformation en un autre endroit de la paroi extérieure de la pièce d'inversion, en vue de la maintenir autant que possible au contact de la portion potentiellement relâchée, ce qui confère à la pièce un effet tenseur. Celui-ci résulte de l'élasticité du matériau, qui compense une déformation vers l'intérieur de la paroi extérieure de la pièce d'inversion par la création ailleurs d'une protubérance temporaire, qui maintient dans pratiquement tous les cas le contact avec le câble ou les fils.

Cet effet tenseur bénéficie de plus d'une optimisation de la forme de ladite paroi extérieure, laquelle peut être munie d'au moins un renflement d'allure convexe. Chacun de ces renflements s'accentue s'il y a déformation de la paroi extérieure, et maintient dès lors encore plus naturellement la tension en gardant le contact par effet ressort avec toute portion potentiellement relâchée du câble ou des fils.

Selon une possibilité, la pièce d'inversion peut être prévue creuse, avec une portion intérieure rigide et une portion extérieure flexible et élastique. Les parois latérales qui la constituent forment alors une enveloppe présentant des propriétés mécaniques distinctes selon leur orientation vers l'intérieur ou vers l'extérieur du contact tournant.

En variante, cette pièce peut être prévue pleine, et par exemple alors constituée en un matériau de type mousse dense élastique recouverte, sur sa paroi intérieure, d'un revêtement rigide.

Dans la configuration creuse, il est possible de prévoir l'épaisseur de la paroi intérieure rigide soit supérieure à celle de la paroi extérieure souple.

Cette configuration est économiquement favorable, car elle permet de n'utiliser qu'un unique matériau pour la réalisation de la pièce d'inversion, matériau dont les propriétés mécaniques sont choisies de telle sorte que, en jouant sur le dimensionnement de sa section, il présente une élasticité suffisante pour la paroi extérieure, et une rigidité adéquate pour la paroi intérieure.

De préférence, les parois dudit canal d'inversion peuvent être prévues de forme, sensiblement semi-circulaire, concaves et d'allure symétrique par rapport à un axe médian du canal, forme qui facilite naturellement, au moins dans un sens, le changement de direction aboutissant à une inversion de l'enroulement / déroulement du câble.

L'une des parois épouse en effet, dans la phase de déroulement, le câble ou les fils, qui repousse (nt) par conséquent la pièce d'inversion tout en glissant sur cette paroi. Lors de l'enroulement, en revanche, il n'y a pas d'adaptation de forme. Le câble ou les fils se tend (ent) progressivement jusqu'à atteindre un rayon de courbure minimal dans le canal d'inversion, après quoi seulement ils entraînent en rotation la pièce d'inversion.

Pour certains câbles ou ensemble de fils, selon leur nature et leur dimensionnement (câble par exemple trop épais), et dans certaines conditions (immobilisation supérieure à quelques jours...), le déplacement de la pièce intermédiaire est difficile à réamorcer au déroulement. Dans cette hypothèse, le câble et la pièce restent bloqués au niveau du canal d'inversion, et seule la portion du câble située à l'intérieur de la pièce intermédiaire d'inversion se déroule, provoquant une déformation de la paroi intérieure par exercice d'une contrainte radiale périphériquement répartie, et par conséquent un élargissement du canal d'inversion.

Compte tenu de la rigidité de ladite paroi intérieure, cela n'est possible que très temporairement, jusqu'à équilibrage avec l'effort résistant dû à l'élasticité du matériau constituant la pièce d'inversion. Celle-ci, en se refermant, peut provoquer un pliage accidentel du câble ou des fils, voire les endommager.

Pour éviter ce problème, il peut être prévu, selon l'invention que les parois soient reliées par une patte de raccordement solidarisant leurs chants axiaux en regard.

Il se produit alors, bien entendu, une perte d'élasticité au niveau du canal, dont l'importance est cependant minime au regard de l'inconvénient résultant d'un pliage non désiré du câble ou des fils.

Selon une autre possibilité, les parois de la pièce d'inversion peuvent être solidarisées par des nervures.

De préférence encore, au moins l'une des parois axiales intérieure et extérieure présente une interruption au voisinage du canal d'inversion.

La pièce intermédiaire n'a donc plus la forme initiale simple et fermée. L'existence de ces ouvertures permet en fait de rendre plus flexible les parois du canal d'inversion. Une telle configuration est par exemple appropriée lorsque des défauts de co-axialité sont à craindre entre les deux parties en rotation relative du contact tournant, et peut aussi être utilisée avec plusieurs câbles ou ensembles de fils.

L'effet tenseur qui résulte de la flexibilité et de l'élasticité de la paroi extérieure de la pièce d'inversion permet en principe de supprimer le déplacement parasite du câble ou des fils, et de supprimer les bruits qui en résultent. En revanche, rien n'empêche la pièce intermédiaire de se déplacer axialement, ce qui provoque également des nuisances sonores. Cette pièce n'est en effet pas au contact des flasques, puisqu'un jeu fonctionnel lui permet de se déplacer librement à l'intérieur du volume annulaire.

C'est la raison pour laquelle, selon l'invention, des moyens ont été prévus pour supprimer ou limiter les possibilités de déplacement axial de ladite pièce d'inversion entre lesdits flasques.

De préférence, lesdits moyens sont constitués de lames élastiques disposées sur au moins l'une des faces de la pièce d'inversion orientée parallèlement aux flasques radiaux.

L'extrémité libre desdites lames peut, le cas échéant, disposer d'un contact avec le flasque qui leur fait face, contact qui est nécessairement limité, presque ponctuel, et ne doit pas empêcher le déplacement rotatif de la pièce d'inversion dans le volume annulaire.

Lesdites lames sont alors de préférence orientées radialement, ou tangentiellement à au moins l'une des parois axiales de la pièce d'inversion.

Ces lames permettent de résoudre mécaniquement un problème essentiellement acoustique : elles empêchent, autant que possible, le déplacement axial de la pièce d'inversion, et suppriment par conséquent les bruits qui en résulteraient.

Selon un traitement plus acoustique du problème, il est possible de prévoir des moyens non pas d'empêcher le mouvement axial de ladite pièce, mais plutôt d'atténuer les bruits provoqués par ces déplacements.

Dans ce cas, de préférence, lesdits moyens consistent par exemple en un revêtement souple et acoustiquement absorbant, équipant au moins l'une des faces parallèles aux flasques de la pièce d'inversion.

L'invention va à présent être décrite plus en détail, en référence aux figures annexées, pour lesquelles :
- la figure 1 est une vue en perspective éclatée d'un dispositif dit à contacts tournants selon l'invention, dépourvu de pièce d'inversion ;
- la figure 2 montre, en perspective, une pièce d'inversion selon l'invention ; et
- la figure 3 représente, toujours en perspective, une variante de pièce d'inversion munie de lames d'absorption du jeu radial
- la figure 4 représente une variante de la configuration de la figure 2, avec un pont de rigidification ; et
- les figures 5 et 6 illustrent deux configurations possibles de la variante aux parois munies d'ouvertures.

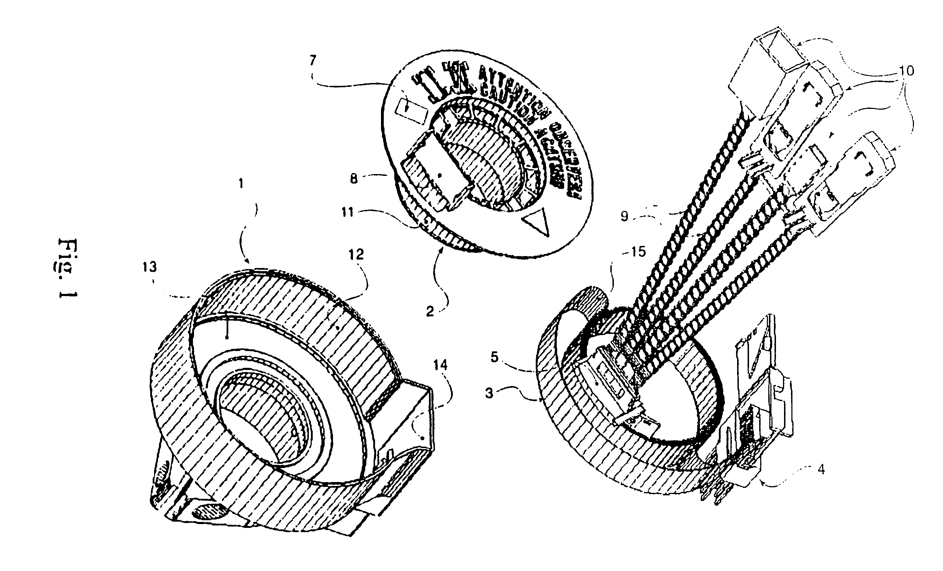

En référence à la figure 1, le dispositif selon l'invention se compose principalement d'un corps fixe (1) à l'intérieur duquel est monté libre en rotation un corps mobile (2), en l'occurrence mécaniquement relié à la colonne de direction d'un véhicule, et par conséquent assujetti aux mouvements rotatifs imprimés au volant. Un câble plat flexible (3) de liaison électrique, doté à ses deux extrémités de connecteurs (4, 5) de liaison respectivement avec le corps fixe (1) et le corps mobile (2), est disposé entre ces derniers.

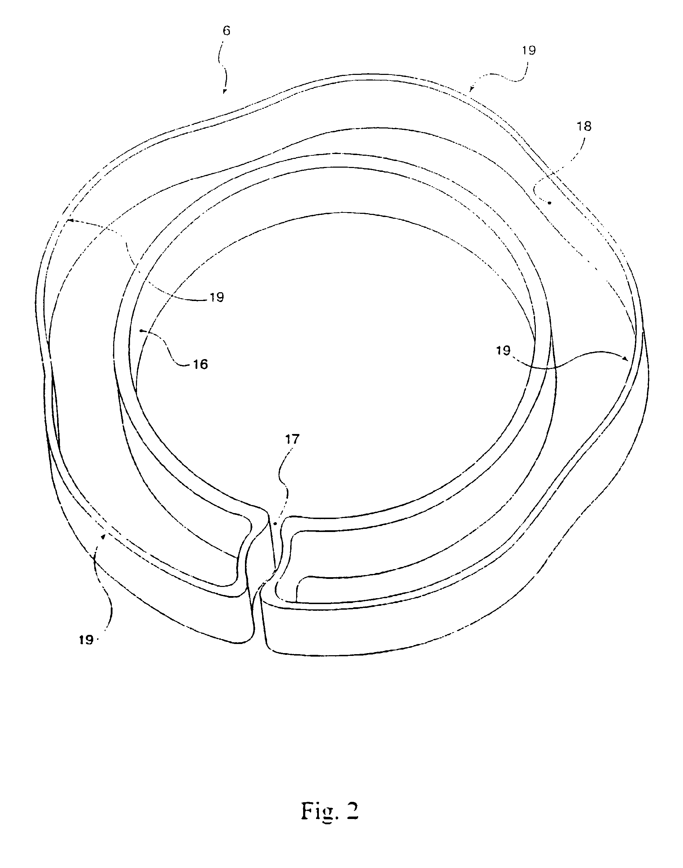

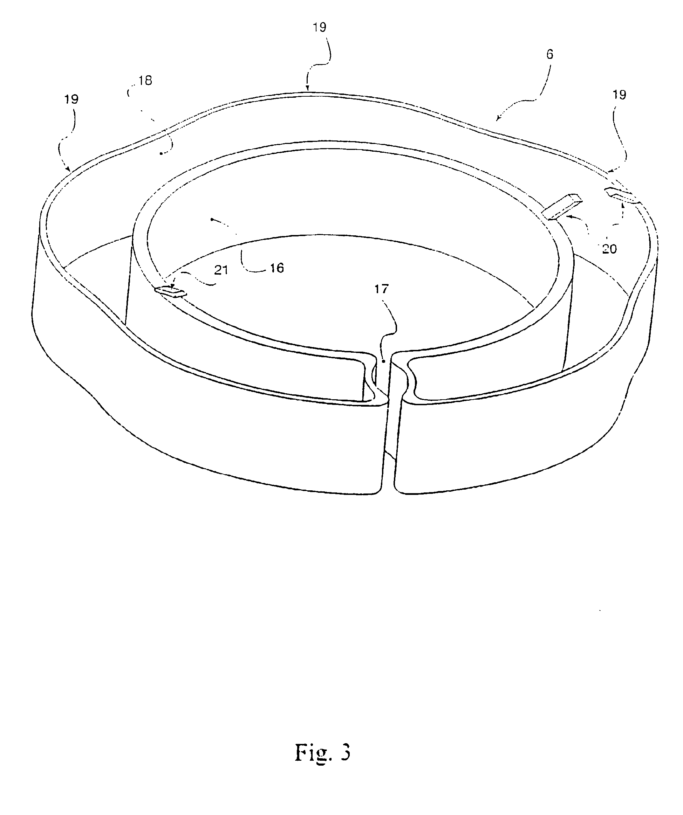

Une pièce de guidage (6) (voir en figures 2 et 3) évoluant selon une trajectoire circulaire relativement aux dits corps (1, 2) permet d'assurer d'une part l'inversion du sens d'enroulement du câble plat (3), et d'autre part son guidage et son maintien à l'intérieur du contact tournant. Le corps mobile (2) comporte un flasque (7) et une paroi (11) dite paroi intérieure par référence au volume interne dudit contact tournant, à laquelle est fixé le connecteur (5).

Ce flasque (7) comporte un orifice protégé par un muret (8) permettant le passage de câbles surmoulés (9) dont les extrémités sont munies de connecteurs (10) destinés à les raccorder à des circuits électriques câblés dans le véhicule.

Le corps fixe (1) et le corps mobile (2) définissent donc un volume sensiblement annulaire à section rectangulaire, dans lequel sont disposés et se déplacent d'une part le câble plat (3), et d'autre part la pièce de guidage (6). Le corps fixe (1) comprend la paroi extérieure (12) dudit volume, ainsi qu'un second flasque (13). Un évidement (14) pratiqué dans ladite paroi (12) permet la fixation du connecteur (4) équipant l'autre extrémité du câble plat (3).

En référence à la figure 2, la pièce de guidage (6) est munie d'un anneau intérieur (16) rigide dans lequel est pratiqué le canal (17) de passage du câble plat, qui est en réalité le lieu de la création de la boucle d'inversion (15) dudit câble (3). Ce canal (17) comporte deux parois concaves, de concavité opposée.

La pièce (6) comporte également, dans la continuité de l'anneau intérieur (16), une paroi extérieure (18) flexible élastique, munie de renflements successifs (19) générant un effet ressort.

Dans la configuration représentée, la paroi axiale intérieure (16) présente une épaisseur supérieure à celle de la paroi extérieure flexible (18). La pièce est réalisée par exemple par moulage d'un même matériau, et la différence de dimensionnement précitée permet d'obtenir une flexibilité et une élasticité convenables pour la paroi extérieure (18), ainsi qu'une rigidité suffisante pour la paroi axiale intérieure (16).

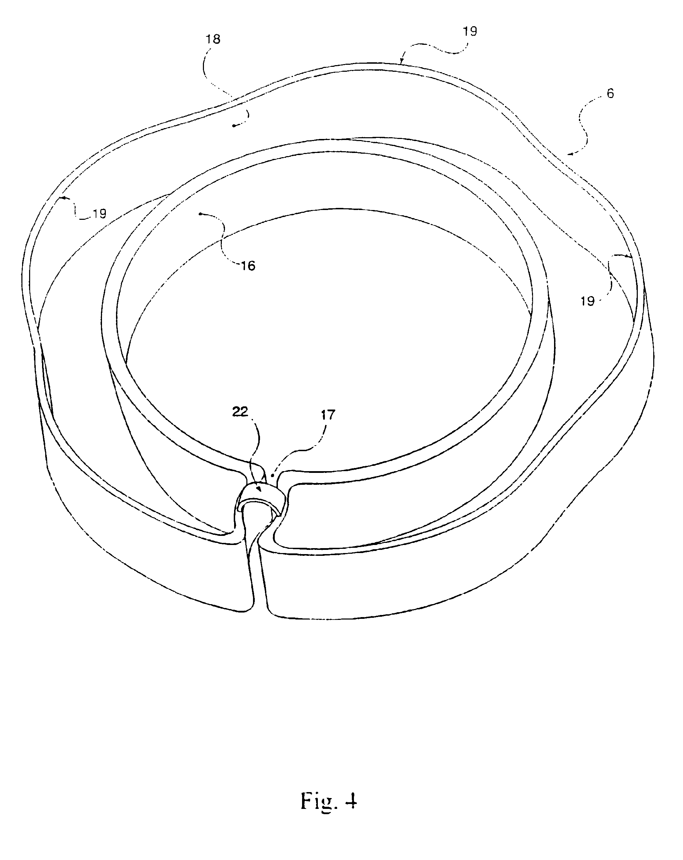

Pour rigidifier encore la paroi axiale intérieure (16), et éviter qu'elle se déforme notamment sous l'action du câble (3) en phase de déroulement, il est possible de rajouter une patte (22) ou pont de raccordement des parois du canal (17) d'inversion, comme cela est montré en figure 4. La paroi intérieure (16) est alors contrainte de garder son diamètre initial.

En référence à la figure 3, ladite paroi (16) est surmontée de lames élastiques (20, 21) se développant soit radialement (20), soit tangentiellement (21). Les extrémités libres de ces lames sont un peu surélevées, de telle sorte qu'elles peuvent venir au contact du flasque (7, 13) qui leur fait face, de manière à supprimer ou atténuer le déplacement axial de la pièce (6) dans le volume annulaire précité sans inhiber son déplacement angulaire.

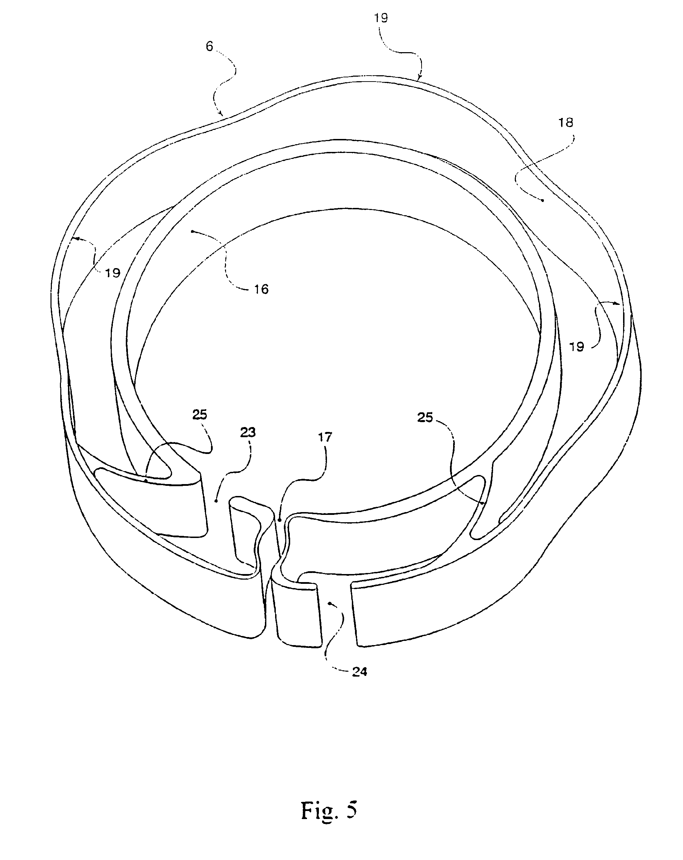

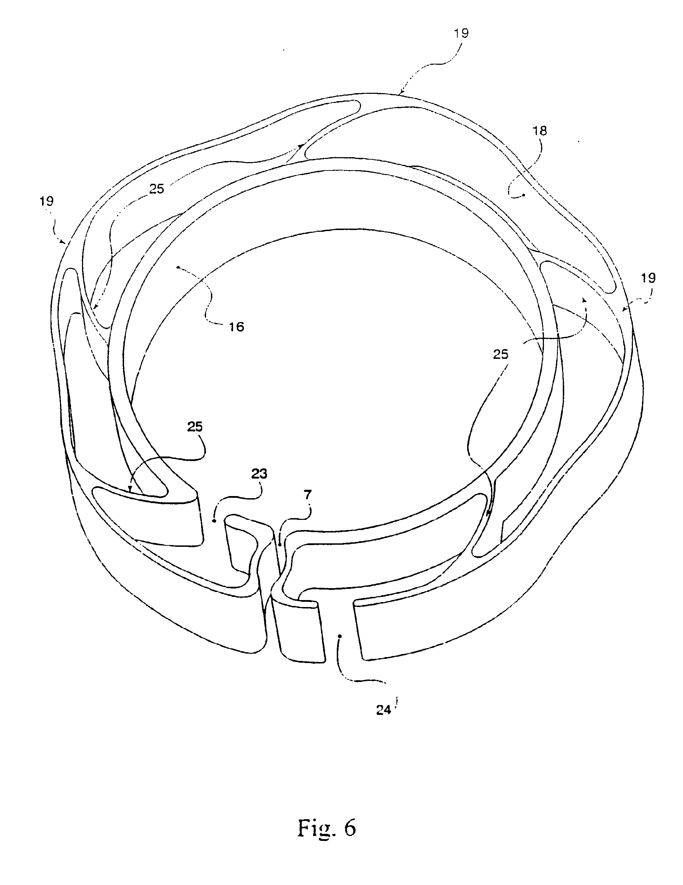

Pour rendre les parois axiales intérieure (16) et extérieure (18) plus flexibles, il est possible de mettre en oeuvre les configurations des figures 5 et 6, dans lesquelles lesdites parois comportent une interruption ou ouverture (23, 24), permettant notamment d'augmenter l'adaptabilité de la pièce (6) aux défauts de co-axialité. Dans l'hypothèse de la figure 5, seules deux nervures (25) sont disposées entre la paroi intérieure (16) et la paroi extérieure (18), alors qu'elles sont plus nombreuses en figure 6. Le choix de leur nombre dépend du contexte d'utilisation de la pièce d'inversion (6).

Bien entendu, la configuration montrée dans les figures précédentes ne représente que quelques exemples possibles de mise en oeuvre de l'invention. Celle-ci englobe également d'autres variantes de formes et de configurations, telles que par exemple l'emploi d'une pièce (6) en mousse dense pleine, d'un pont (22) avec les variantes à ouvertures (23, 24) etc..., qui sont à la portée de l'homme de l'art.

## Revendications

1. Dispositif assurant la liaison électrique entre deux corps respectivement fixe (1) et mobile (2) animés d'un mouvement relatif de rotation, définissant entre eux un espace annulaire d'axe confondu avec l'axe de rotation, et présentant à cet effet deux flasques radiaux (7, 13), chacun solidaire de l'une de deux parois axiales en regard respectivement intérieur (11) et extérieure (12), entre lesquelles sont disposés d'une part au moins un câble plat flexible (3) ou au moins un ensemble de fils flexibles de liaison électrique enroulé de sorte que chacune de ses extrémités soit fixée à l'une desdites parois (11, 12), et d'autre part au moins une pièce de guidage (6) apte à se déplacer relativement aux dits corps (1, 2) lorsque ceux-ci sont en mouvement relatif, selon une trajectoire circulaire centrée sur ledit axe de rotation, ladite pièce (6) étant d'allure annulaire et permettant l'inversion de l'enroulement du câble (3) ou de l'ensemble de fils flexibles par passage dans un canal (17) d'inversion d'orientation d'allure radiale faisant varier en se déplaçant la longueur de la portion bobinée sur la paroi intérieure (16) et celle de la portion enroulée au voisinage de la paroi extérieure (18), **caractérisé en ce que** la paroi axiale intérieure (16) de ladite pièce (6) est rigide alors que la paroi axiale extérieure (18) est flexible et élastique.

2. Dispositif assurant la liaison électrique entre deux corps respectivement fixe et mobile animés d'un mouvement relatif de rotation selon la revendication précédente, **caractérisé en ce que** la paroi axiale intérieure (16) de la pièce d'inversion (6) est circulaire.

3. Dispositif assurant la liaison électrique entre deux corps respectivement fixe et mobile animés d'un mouvement relatif de rotation selon l'une des revendications précédentes, **caractérisé en ce que** la paroi axiale extérieure (18) de la pièce d'inversion (6) est munie d'au moins un renflement (19) d'allure convexe.

4. Dispositif assurant la liaison électrique entre deux corps respectivement fixe et mobile animés d'un mouvement relatif de rotation selon l'une quelconque des revendications précédentes, **caractérisé en ce que** la pièce d'inversion (6) est creuse.

5. Dispositif assurant la liaison électrique entre deux corps respectivement fixe et mobile animés d'un mouvement relatif de rotation selon l'une quelconque des revendications précédentes, **caractérisé en ce que** la pièce d'inversion (6) est pleine et constituée en un matériau de type mousse dense élastique recouverte, sur sa paroi intérieure (16), d'un revêtement rigide.

6. Dispositif assurant la liaison électrique entre deux corps respectivement fixe et mobile animés d'un mouvement relatif de rotation selon l'une quelconque des revendications 1 à 4, **caractérisé en ce que** l'épaisseur de la paroi intérieure rigide (16) est supérieure à celle de la paroi extérieure souple (18).

7. Dispositif assurant la liaison électrique entre deux corps respectivement fixe et mobile animés d'un mouvement relatif de rotation selon l'une quelconque des revendications précédentes, **caractérisé en ce que** les parois du canal d'inversion (17) sont de forme sensiblement semi-circulaire, concaves et d'allure symétrique par rapport à un axe médian dudit canal.

8. Dispositif assurant la liaison électrique entre deux corps respectivement fixe et mobile animés d'un mouvement relatif en rotation selon l'une quelconque des revendications précédentes, **caractérisé en ce que** les parois du canal d'inversion (17) sont reliées par une patte de raccordement (22) solidarisant leurs chants axiaux en regard.

9. Dispositif assurant la liaison électrique entre deux corps respectivement fixe et mobile animés d'un mouvement relatif en rotation selon l'une quelconque des revendications précédentes, **caractérisé en ce que** les parois axiales extérieure (18) et intérieure (16) sont reliées par des nervures (25).

10. Dispositif assurant la liaison électrique entre deux corps respectivement fixe et mobile animés d'un mouvement relatif en rotation selon l'une quelconque des revendications précédentes, **caractérisé en ce qu'**au moins l'une des parois axiales intérieure (16) et extérieure (18) présente une interruption (23) au voisinage du canal d'inversion (17).

11. Dispositif assurant la liaison électrique entre deux corps respectivement fixe et mobile animés d'un mouvement relatif de rotation selon l'une quelconque des revendications précédentes, **caractérisé en ce que** la pièce d'inversion (6) comporte des moyens (20, 21) de limiter ou de supprimer le déplacement axial en direction des flasques radiaux (7, 13).

12. Dispositif assurant la liaison électrique entre deux corps respectivement fixe et mobile animés d'un mouvement relatif de rotation selon la revendication précédente, **caractérisé en ce que** lesdits moyens sont constitués de lames élastiques (20, 21) disposées sur au moins l'une des faces de la pièce d'inversion (6) orientée parallèlement aux flasques radiaux (7, 13).

13. Dispositif assurant la liaison électrique entre deux corps respectivement fixe et mobile animés d'un mouvement relatif de rotation selon la revendication précédente, **caractérisé en ce que** lesdites lames sont orientées radialement (20) ou tangentiellement (21) à au moins l'une des parois axiales (16, 18) de la pièce d'inversion (6).

14. Dispositif assurant la liaison électrique entre deux corps respectivement fixe et mobile animés d'un mouvement relatif de rotation selon l'une quelconque des revendications précédentes, **caractérisé en ce que** la pièce d'inversion (6) comporte des moyens d'atténuer le bruit provoqué par son déplacement axial.

15. Dispositif assurant la liaison électrique entre deux corps respectivement fixe et mobile animés d'un mouvement relatif de rotation selon la revendication précédente, **caractérisé en ce que** lesdits moyens consistent en un revêtement souple équipant au moins l'une des faces parallèles aux flasques (7, 13) de la pièce d'inversion (6).

## Claims

1. A device for providing an electrical connection between two bodies, one fixed (1) and one movable (2), which are set into a relative rotary movement and which define between them an annular space, the axis of which coincides with the axis of rotation, and which have to this end two radial flanges (7, 13), each integral with one of two axial walls which face each other from the inside (11) and the outside (12) respectively, between which are disposed on the one hand at least one flat flexible cable (3) or at least one set of flexible electrical connection wires wound so that each end is fixed to one of said walls (11, 12), and on the other hand at least one guiding part (6) designed to move relative to said bodies (1, 2) when said bodies are in relative motion along a circular trajectory centred on said axis of rotation, said part (6) being of annular shape and permitting the inversion of the winding of the cable (3) or set of flexible wires via passage in a radial orientation inversion channel (17) which causes in the course of its movement a variation of the length of the portion wound around the internal wall (18) and of that of the portion wound in the vicinity of the external wall, **characterised in that** the internal axial wall (16) of said part (6) is rigid, whereas the external axial wall (18) is flexible and elastic.

2. The device for providing an electrical connection between two bodies, one fixed and one movable, which are set into a relative rotary movement, according to the preceding claim, **characterised in that** the internal axial wall (16) of the inversion part (6) is circular.

3. The device for providing an electrical connection between two bodies, one fixed and one movable, which are set into a relative rotary movement, according to any one of the preceding claims, **characterised in that** the external axial wall (18) of the inversion part (6) is provided with at least one convex bead (19).

4. The device for providing an electrical connection between two bodies, one fixed and one movable, which are set into a relative rotary movement, according to any one of the preceding claims, **characterised in that** the inversion part (6) is hollow.

5. The device for providing an electrical connection between two bodies, one fixed and one movable, which are set into a relative rotary movement, according to any one of the preceding claims, **characterised in that** the inversion part (6) is solid and is constituted by a soft, dense, elastic material coated, on its internal wall (16), with a rigid coating.

6. The device for providing an electrical connection between two bodies, one fixed and one movable, which are set into a relative rotary movement, according to any one of claims 1 to 4, **characterised in that** the thickness of the rigid internal wall (16) is greater than that of the flexible external wall (18).

7. The device for providing an electrical connection between two bodies, one fixed and one movable, which are set into a relative rotary movement, according to any one of the preceding claims, **characterised in that** the walls of the inversion channel (17) are essentially semi-circular, concave and symmetrical relative to a centre axis of said channel.

8. The device for providing an electrical connection between two bodies, one fixed and one movable, which are set into a relative rotary movement, according to any one of the preceding claims, **characterised in that** the walls of the inversion channel (17) are connected by a connection bridge (22) joining their opposing axial edges.

9. The device for providing an electrical connection between two bodies, one fixed and one movable, which are set into a relative rotary movement, according to any one of the preceding claims, **characterised in that** the external (18) and internal (16) axial walls are connected by ribs (25).

10. The device for providing an electrical connection between two bodies, one fixed and one movable, which are set into a relative rotary movement, according to any one of the preceding claims, **characterised in that** at least one of the internal (16) and external (18) axial walls has a gap (23) in the vicinity of the inversion channel (17).

11. The device for providing an electrical connection between two bodies, one fixed and one movable, which are set into a relative rotary movement, according to any one of the preceding claims, **characterised in that** the inversion part (6) comprises means (20, 21) for limiting or suppressing any axial displacement towards the radial flanges (7, 13).

12. The device for providing an electrical connection between two bodies, one fixed and one movable, which are set into a relative rotary movement, according to any one of the preceding claims, **characterised in that** said means are constituted by elastic tabs (20, 21) disposed on at least one of the surfaces of the inversion part (6) oriented parallel to the radial flanges (7, 13).

13. The device for providing an electrical connection between two bodies, one fixed and one movable, which are set into a relative rotary movement, according to any one of the preceding claims, **characterised in that** said tabs are oriented radially (20) or tangentially (21) to at least one of the axial walls (16, 18) of the inversion part (6).

14. The device for providing an electrical connection between two bodies, one fixed and one movable, which are set into a relative rotary movement, according to any one of the preceding claims, **characterised in that** the inversion part (6) comprises means for attenuating the noise caused by its axial displacement.

15. The device for providing an electrical connection between two bodies, one fixed and one movable, which are set into a relative rotary movement, according to any one of the preceding claims, **characterised in that** said means consist in a flexible coating covering at least one of the parallel surfaces of the flanges (7, 13) of the inversion part (6).

## Patentansprüche

1. Vorrichtung zum Gewährleisten einer elektrischen Verbindung zwischen zwei Körpern, einem festen (1) und einem beweglichen (2), die zu einer relativen Rotationsbewegung angeregt werden und die zwischen sich einen ringförmigen Raum mit einer Achse definieren, die mit der Rotationsachse zusammenfällt, und dazu zwei radiale Flansche (7, 13) aufweisen, die jeweils fest mit einer der beiden einander axial gegenüber liegenden Innenwand (11) und Außenwand (12) verbunden sind, wobei zwischen ihnen einerseits wenigstens ein flexibles Flachkabel (3) oder wenigstens ein Satz flexibler elektrischer Verbindungsdrähte, so aufgerollt, dass jedes seiner Enden an einem der genannten Wände (11, 12) befestigt ist, und andererseits wenigstens ein Führungsstück (6) angeordnet sind, das sich relativ zu den genannten Körpern (1, 2) bewegen kann, wenn sich diese in relativer Bewegung über eine kreisförmige Bahn befinden, die auf der genannten Rotationsachse zentriert ist, wobei das genannte Stück (6) ringförmig ist und eine Umkehr des Aufrollens des Kabels (3) oder Satzes von flexiblen Drähten durch Passage in einem radialen Ausrichtungsumkehrkanal (17) zulässt, der bei seiner Bewegung eine Änderung der Länge des aufgewickelten Abschnitts an der Innenwand (16) und der des aufgewickelten Abschnitts in der Nähe der Außenwand (18) bewirkt, **dadurch gekennzeichnet, dass** die axiale Innenwand (16) des genannten Stücks (6) starr ist, während die axiale Außenwand (18) flexibel und elastisch ist.

2. Vorrichtung zum Gewährleisten einer elektrischen Verbindung zwischen zwei Körpern, einem festen und einem beweglichen, die zu einer relativen Rotationsbewegung angeregt werden, nach dem vorherigen Anspruch, **dadurch gekennzeichnet, dass** die axiale Innenwand (16) des Umkehrstücks (6) kreisförmig ist.

3. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die axiale Außenwand (18) des Umkehrstücks (6) mit wenigstens einem konvexen Wulst (19) ausgestattet ist.

4. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** das Umkehrstück (6) hohl ist.

5. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** das Umkehrstück (6) massiv ist und aus einem weichen, dichten, elastischen Material gebildet ist, das auf seiner Innenwand (16) mit einer starren Auskleidung bedeckt ist.

6. Vorrichtung zum Gewährleisten einer elektrischen Verbindung zwischen zwei Körpern, einem festen und einem beweglichen, die zu einer relativen Rotationsbewegung angeregt werden, nach einem der Ansprüche 1 bis 4, **dadurch gekennzeichnet, dass** die starre Innenwand (16) dicker ist als die flexible Außenwand (18).

7. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die Wände des Umkehrkanals (17) im Wesentlichen halbkreisförmig, konkav und symmetrisch in Bezug auf eine mittlere Achse des genannten Kanals geformt sind.

8. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die Wände des Umkehrkanals (17) durch einen Anschlussfuß (22) verbunden sind, dessen axiale Kanten einander gegenüber liegend befestigt sind.

9. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die axialen Außenwände (18) und Innenwände (16) durch Rippen (25) verbunden sind.

10. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** wenigstens eine der axialen Innenwände (16) und Außenwände (18) eine Unterbrechung (23) in der Nähe des Umkehrkanals (17) haben.

11. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** das Umkehrstück (6) Mittel (20, 21) zum Begrenzen oder zum Unterdrücken der axialen Verschiebung in Richtung der radialen Flansche (7, 13) umfasst.

12. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die genannten Mittel durch elastische Lamellen (20, 21) gebildet werden, die auf wenigstens einer der Flächen des Umkehrstücks (6) angeordnet sind, das parallel zu den radialen Flanschen (7, 13) orientiert ist.

13. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die genannten Lamellen radial (20) oder tangential (21) zu wenigstens einer der axialen Wände (16, 18) des Umkehrstücks (6) ausgerichtet sind.

14. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** das Umkehrstück (6) Mittel zum Dämpfen von Geräuschen umfasst, die durch seine axiale Bewegung verursacht werden.

15. Vorrichtung zum Gewährleisten einer elektrischen Verbindung zwischen zwei Körpern, einem festen und einem beweglichen, die zu einer relativen Rotationsbewegung angeregt werden, nach einem der vorherigen Ansprüche, **dadurch gekennzeichnet, dass** die genannten Mittel aus einer flexiblen Auskleidung bestehen, die wenigstens eine der Flächen parallel zu den Flanschen (7, 13) des Umkehrstücks (6) ausstattet.
